# FASCICULE DE BREVET EUROPEEN

(11) **EP 3 286 022 B1**
(45) Date de publication et mention de la délivrance du brevet: **09.06.2021**
(21) Numéro de dépôt: 16714426.0
(22) Date de dépôt: 05.04.2016
(51) Int. Cl.: B60C 23/00, C09J 153/02

(54) **PNEUMATIQUE PRET A RECEVOIR UN ORGANE A SA SURFACE**
REIFEN MIT BEREITSCHAFT ZUR AUFNAHME EINES ELEMENTS AUF DER OBERFLÄCHE DAVON
TYRE READY TO RECEIVE A MEMBER ON THE SURFACE THEREOF

(30) Priorité: 20.04.2015 FR 1553512
(43) Date de publication de la demande: 28.02.2018
(73) Titulaire: Compagnie Générale des Etablissements Michelin, 63000 Clermont-Ferrand (FR)
(72) Inventeur: LEMAL, Vincent, 63040 Clermont-Ferrand Cedex 9 (FR)
(74) Mandataire: Louret, Sylvain
(86) Numéro de dépôt international: PCT/EP2016/057441
(87) Numéro de publication internationale: WO 2016/169764

(56) Documents cités:
- EP-A1- 1 674 489
- WO-A1-2014/093043
- FR-A1- 2 971 266
- US-A1- 2012 248 274

## Description

### Domaine de l'invention

La présente invention est relative aux pneumatiques, et plus particulièrement aux pneumatiques prêts à recevoir un organe, par exemple électronique, fixé à leur surface intérieure et/ou extérieure.

### État de la technique

Le développement récent des systèmes de surveillance des pneumatiques d'un véhicule en roulage (en anglais « Tire Pressure Monitoring Systems » ou « TPMS ») est limité par la difficulté de fixer de façon rapide et durable un objet à la surface d'un pneumatique.

Le document US 2012/0248274 propose un pneumatique comportant une surface intérieure et/ou extérieure avec une zone d'accueil, une couche adhésive disposée sur cette zone d'accueil et un film de protection disposé sur la couche adhésive, dans lequel la couche adhésive est constituée d'un tissu noyé dans un matériau thermoplastique. Après avoir retiré le film de protection de la surface de la couche adhésive, on met en contact la couche adhésive de la zone d'accueil du pneumatique et la couche de fixation de l'organe. La présence du tissu permet une fixation stable de la couche adhésive à la surface du pneumatique lors de la vulcanisation du pneumatique. La couche de fixation de l'organe est aussi constituée d'un matériau thermoplastique et la fixation réversible de l'organe à la surface du pneumatique est assurée par mise en contact des deux couches adhésive et de fixation après ramollissement de celles-ci par chauffage.

Ce document ne donne aucune indication quant à la nature des matériaux thermoplastiques utilisables.

### Description brève de l'invention

L'invention a pour objet un pneumatique similaire caractérisé en ce que la composition de la couche adhésive est à base d'un élastomère thermoplastique styrénique à blocs (TPS) comportant un bloc élastomère diénique avec un taux molaire de motifs diéniques relativement à l'ensemble des motifs du bloc élastomère supérieur à 10 % et en ce que la composition de la couche adhésive comporte un ou des polyphénylènes éthers (PPE).

L'utilisation d'une telle couche adhésive a l'avantage de permettre une co-réticulation de la couche adhésive et du matériau caoutchouteux de la surface du pneumatique, surface intérieure ou extérieure, lors de la vulcanisation du pneumatique grâce à la présence des doubles liaisons présentes dans les élastomères diéniques. La couche adhésive est ainsi liée de façon stable et durable par co-réticulation à la surface du pneumatique et permet de s'affranchir de la présence d'un tissu. La présence du polyphénylène éther permet d'améliorer de façon très surprenante l'adhésion à chaud de la couche adhésive sur la surface du pneumatique en conditions de service, c'est-à-dire avec des températures maximales de l'ordre de 100 °C.

L'invention a aussi pour objet un ensemble comprenant un pneumatique et un organe comprenant une couche de fixation dont la composition est à base d'un élastomère thermoplastique styrénique à blocs (TPS), ledit organe étant fixé à la surface du pneumatique par la couche adhésive liée à la couche de fixation.

Et selon un mode de réalisation préférentiel, l'élastomère thermoplastique styrénique à blocs de la couche de fixation est identique à l'élastomère thermoplastique styrénique à blocs de la couche adhésive.

De plus, ce mode de fixation procure une grande liberté quant à la géométrie et les fonctions de l'organe du fait de la fixation post vulcanisation.

L'organe peut être un boîtier apte à recevoir un dispositif électronique.

L'organe peut aussi être un dispositif électronique.

Il peut aussi être notamment un marquage ou une décoration.

Un autre objet de l'invention est un procédé de fixation d'un organe avec une couche de fixation à la surface d'un pneumatique avec une couche adhésive protégée par un film de protection disposée sur une zone d'accueil, dans lequel :
- on retire tout ou partie du film de protection ;
- on porte lesdites couche adhésive et couche de fixation à une température supérieure aux températures de ramollissement ou Tg (ou Tf, le cas échéant) desdits élastomères thermoplastiques à blocs ; et
- on met en contact, en appliquant une pression, la couche de fixation et la couche adhésive.

La fixation de l'organe est ainsi réalisée très rapidement et très simplement. La fixation est effective et durable dès que les températures des couches d'adhésion et de fixation sont redescendues sous les températures de ramollissement ou Tg (ou Tf, le cas échéant) des TPS. Elle a aussi l'avantage d'être totalement réversible.

L'invention concerne plus particulièrement les pneumatiques destinés à équiper des véhicules à moteur de type tourisme, SUV (« *Sports Utility Vehicles* »), deux roues (notamment motos), avions, comme des véhicules industriels choisis parmi camionnettes, « Poids-lourd » - c'est-à-dire métro, bus, engins de transport routier (camions, tracteurs, remorques), véhicules hors-la-route tels qu'engins agricoles ou de génie civil -, autres véhicules de transport ou de manutention.

### Description détaillée de l'invention

Dans la présente description, sauf indication expresse différente, tous les pourcentages (%) indiqués sont des % en masse.

Par « un » on entend « un ou plusieurs », à titre d'exemple, « un élastomère thermoplastique » est équivalent à « un ou plusieurs élastomères thermoplastiques ». De même « un polyphénylène éther » est équivalent à « un ou plusieurs polyphénylènes éthers ».

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

Les détails de l'invention seront explicités ci-dessous par la description, dans un premier temps, des constituants spécifiques du pneumatique selon l'un des objets de l'invention, puis par la description du mode de fabrication du pneumatique et des tests de caractérisation réalisés.

Le pneumatique selon l'invention a pour caractéristiques essentielles d'être pourvu à une zone d'accueil donnée de sa surface d'une couche adhésive comportant un élastomère thermoplastique styrénique et un polyphénylène éther, la couche adhésive étant protégée par un film de protection tels que définis ci-après.

### Élastomère thermoplastique styrénique

Les élastomères thermoplastiques (en abrégé « TPE ») ont une structure intermédiaire entre polymères thermoplastiques et élastomères. Ils sont constitués de séquences rigides thermoplastiques reliées par des séquences souples élastomères, par exemple polybutadiène, polyisoprène, poly(éthylène/butylène), ou encore polyisobutylène. Ce sont souvent des élastomères triblocs avec deux segments rigides reliés par un segment souple. Les segments rigides et souples peuvent être disposés linéairement, en étoile ou branchés. Typiquement, chacun de ces segments ou blocs contient au minimum plus de 5, généralement plus de 10 unités de base (par exemple unités styrène et unités isoprène pour un copolymère blocs styrène/ isoprène/ styrène).

Les élastomères thermoplastiques (en abrégé « TPE ») ont une structure intermédiaire entre polymères thermoplastiques et élastomères. Ce sont des copolymères à blocs, constitués de blocs rigides, thermoplastiques, reliés par des blocs souples, élastomères.

### Nature des blocs thermoplastiques

On utilisera pour la définition des blocs thermoplastiques la caractéristique de température de transition vitreuse (Tg) du bloc rigide thermoplastique. Cette caractéristique est bien connue de l'homme du métier. Elle permet notamment de choisir la température de mise en œuvre industrielle (transformation). Dans le cas d'un polymère (ou d'un bloc de polymère) amorphe, la température de mise en œuvre est choisie sensiblement supérieure à la Tg du bloc thermoplastique. Dans le cas spécifique d'un polymère (ou d'un bloc de polymère) semi-cristallin, on peut observer une température de fusion alors supérieure à la température de transition vitreuse. Dans ce cas, c'est plutôt la température de fusion (Tf) qui permet de choisir la température de mise en œuvre du polymère (ou bloc de polymère) considéré. Ainsi, par la suite, lorsqu'on parlera de « Tg (ou Tf, le cas échéant) », il faudra considérer qu'il s'agit de la température utilisée pour choisir la température de mise en œuvre.

On peut aussi considérer la température de ramollissement des TPE. Cette température de ramollissement est proche de la température de mise en œuvre. Pour la déterminer, on peut, par exemple, soumettre un échantillon à une contrainte de compression fixe, placer l'échantillon dans un four permettant de réaliser une rampe de température de l'ambiante à une température donnée, de l'ordre de la température maximale de cuisson (exemple : 180°C), avec une cinétique donnée pendant laquelle on enregistre la déformation de l'échantillon. Les résultats se présentent sous forme de courbe de déformation de l'échantillon en fonction de la température ; on considère usuellement la température de ramollissement comme celle pour laquelle le matériau présente une diminution de son épaisseur de 10%.

L'élastomère thermoplastique selon un objet de l'invention est caractérisé en ce qu'il est choisi parmi les élastomères thermoplastiques styréniques (« TPS »). Par monomère styrénique doit être entendu dans la présente description tout monomère à base de styrène, non substitué comme substitué ; parmi les styrènes substitués peuvent être cités par exemple les méthylstyrènes (par exemple l'o-méthylstyrène, le m-méthylstyrène ou le p-méthylstyrène, l'alpha-méthylstyrène, l'alpha-2-diméthylstyrène, l'alpha-4-diméthylstyrène ou le diphényléthylène), le para-tertio-butylstyrène, les chlorostyrènes (par exemple l'o-chlorostyrène, le m-chlorostyrène, le p-chlorostyrène, le 2,4-dichlorostyrène, le 2,6-dichlorostyrène ou le 2,4,6-trichlorostyrène), les bromostyrènes (par exemple l'o-bromostyrène, le m-bromostyrène, le p-bromostyrène, le 2,4-dibromostyrène, le 2,6-dibromostyrène ou les 2,4,6-tribromostyrène), les fluorostyrènes (par exemple l'o-fluorostyrène, le m-fluorostyrène, le p-fluorostyrène, le 2,4-difluorostyrène, le 2,6-difluorostyrène ou les 2,4,6-trifluorostyrène),le para-hydroxy-styrène ou encore les halogénométhylstryrènes (par exemple le p-chlorométhylstyrène ou le p-bromométhylstyrène).

### Structure du TPS

La masse moléculaire moyenne en nombre (notée Mn) du TPS est préférentiellement inférieure à 500 000 g/mol, plus préférentiellement inférieure à 400 000 g/mol. En effet, une masse Mn trop élevée peut être pénalisante pour le collage de l'organe ou pour la mise en œuvre du TPS. En ce qui concerne la valeur minimale on a constaté que la présence de faibles masses Mn (inférieures à 30 000 g/mol) peut être favorable au collage du capteur. Cela peut être obtenu par un TPS dont la distribution de masses moléculaires Mn est large, ou par le mélange de plusieurs TPS de masses moléculaires adaptées.

La masse moléculaire moyenne en nombre (Mn) de l'élastomère TPS est déterminée de manière connue, par chromatographie d'exclusion stérique (SEC). Par exemple dans le cas des élastomères thermoplastiques styréniques, l'échantillon est préalablement solubilisé dans du tétrahydrofuranne à une concentration d'environ 1 g/l ; puis la solution est filtrée sur filtre de porosité 0,45 µm avant injection. L'appareillage utilisé est une chaîne chromatographique « WATERS alliance ». Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales « STYRAGEL » (« HMW7 », « HMW6E » et deux « HT6E »). Le volume injecté de la solution de l'échantillon de polymère est de 100 µl. Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène. Les conditions sont adaptables par l'homme du métier.

Pour être de nature à la fois élastomère et thermoplastique, le TPS doit être composé de blocs suffisamment incompatibles (c'est-à-dire différents du fait de leur masse, de leur polarité ou de leur Tg respectives) pour conserver leurs propriétés propres de bloc élastomère ou thermoplastique.

Les TPS peuvent être des copolymères avec un petit nombre de blocs (moins de 5, typiquement 2 ou 3), auquel cas ces blocs ont de préférence des masses élevées, supérieures à 15000 g/mol. Ces TPS peuvent être par exemple des mélanges de copolymères diblocs, comprenant un bloc thermoplastique et un bloc élastomère et de copolymères triblocs avec deux segments rigides reliés par un segment souple. Ces mélanges peuvent être majoritairement diblocs ou triblocs. Usuellement on peut avoir un taux de triblocs compris entre 60 et 80 %. Les segments rigides et souples peuvent être disposés linéairement, en étoile ou branchés. Typiquement, chacun de ces segments ou blocs contient souvent au minimum plus de 5, généralement plus de 10 unités de base (par exemple unités styrène et unités butadiène pour un copolymère blocs styrène/ butadiène/ styrène).

Les TPS peuvent aussi comprendre un grand nombre de blocs (plus de 30, typiquement de 50 à 500) plus petits, auquel cas ces blocs ont de préférence des masses peu élevées, par exemple de 500 à 5000 g/mol, ces TPS seront appelés TPS multiblocs par la suite, et sont un enchaînement blocs élastomères - blocs thermoplastiques.

Selon une première variante, le TPS se présente sous une forme linéaire. Par exemple, le TPS est un mélange de copolymère diblocs : bloc thermoplastique / bloc élastomère et de copolymère triblocs : bloc thermoplastique / bloc élastomère / bloc thermoplastique, c'est-à-dire un bloc élastomère central et de deux blocs thermoplastiques terminaux, à chacune des deux extrémités du bloc élastomère. Également, le TPS multiblocs peut être un enchaînement linéaire de blocs élastomères - blocs thermoplastiques. Les TPS selon cette variante sont favorables pour une bonne adhésion de l'organe.

Selon une autre variante de l'invention, le TPS utile pour les besoins de l'invention se présente sous une forme étoilée à au moins trois branches. Par exemple, le TPS peut alors se composer d'un bloc élastomère étoilé à au moins trois branches et d'un bloc thermoplastique, situé à l'extrémité de chacune des branches du bloc élastomère. Le nombre de branches de l'élastomère central peut varier, par exemple de 3 à 12, et de préférence de 3 à 6. Cette variante de TPS est favorable pour une bonne tenue en température.

Selon une autre variante de l'invention, le TPS se présente sous une forme branchée ou dendrimère. Le TPS peut alors se composer d'un bloc élastomère branché ou dendrimère et d'un bloc thermoplastique, situé à l'extrémité des branches du bloc élastomère dendrimère.

### Nature des blocs élastomères

Les blocs élastomères du TPS pour les besoins de l'invention, peuvent être tous les élastomères diéniques insaturés connus de l'homme de l'art. Ils possèdent généralement une Tg inférieure à 25°C, préférentiellement inférieure à 10°C, plus préférentiellement inférieure à 0°C et très préférentiellement inférieure à -10°C. De manière préférentielle également, la Tg bloc élastomère du TPS est supérieure à -100°C.

Par élastomère (ou indistinctement caoutchouc) « diénique », doit être compris de manière connue un (ou plusieurs) élastomère constitué au moins en partie (i.e., un homopolymère ou un copolymère) d'unités monomères diènes (monomères porteurs de deux doubles liaisons carbone-carbone, conjuguées ou non).

Ces élastomères diéniques peuvent être classés dans deux catégories : « insaturés » ou « saturés ». On entend en général par « essentiellement insaturé », un élastomère diénique issu au moins en partie de monomères diènes conjugués, ayant un taux d'insaturations ou de motifs ou unités d'origine diénique (diènes conjugués) qui est supérieur à 10% (% en moles) ; c'est ainsi que des élastomères diéniques tels que les caoutchoucs butyle n'entrent pas dans la définition précédente et peuvent être notamment qualifiés d'élastomères diéniques « saturés » (taux molaire de motifs d'origine diénique faible ou très faible, par exemple de l'ordre de 4 %, toujours inférieur à 10 %). Dans la catégorie des élastomères diéniques «insaturés» utilisables pour l'invention, on entend ainsi tous les élastomères diéniques ayant un taux molaire d'insaturations ou de motifs d'origine diénique (diènes conjugués) supérieur à 10 % et en particulier les élastomères diéniques « fortement insaturés », c'est-à-dire les élastomères diéniques ayant un taux molaire d'insaturations ou de motifs d'origine diénique (diènes conjugués) qui est supérieur à 50%.

On entend plus particulièrement par élastomère diénique insaturé susceptible d'être utilisé dans les blocs élastomères conformes à l'invention :
(a) tout homopolymère d'un monomère diène conjugué, notamment tout homopolymère obtenu par polymérisation d'un monomère diène conjugué ayant de 4 à 12 atomes de carbone ; et
(b) tout copolymère obtenu par copolymérisation d'un ou plusieurs diènes conjugués entre eux ou avec un ou plusieurs composés vinyle aromatique ayant de 8 à 20 atomes de carbone.

Dans le cas de copolymères du type (b), ceux-ci contiennent de 20 à 99% en poids d'unités diéniques et de 1 à 80% en poids d'unités vinylaromatique.

À titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

À titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Selon un mode de réalisation préférentiel de l'invention, les blocs élastomères du TPS présentent au total, une masse moléculaire moyenne en nombre ("Mn") allant de 25 000 g/mol à 350 OOOg/mol, de préférence de 35 000 g/mol à 250 000 g/mol de manière à conférer au TPS de bonnes propriétés d'élastomères et une tenue mécanique suffisante et compatible avec l'utilisation comme couche adhésive pour la fixation d'un organe à la surface d'un pneumatique.

Le bloc élastomère peut également être un bloc comprenant plusieurs types de monomères éthyléniques, diéniques ou styréniques tels que définis ci-dessus.

Le bloc élastomère peut également être constitué de plusieurs blocs élastomères tels que définis ci-dessus.

La microstructure des élastomères est déterminée par analyse RMN ¹H, supplée par l'analyse RMN ¹³C lorsque la résolution des spectres RMN du ¹H ne permet pas l'attribution et la quantification de toutes les espèces. Les mesures sont réalisées à l'aide d'un spectromètre RMN BRUKER 500MHz à des fréquences de 500.43 MHz pour l'observation du proton et 125.83MHz pour l'observation du carbone.

Pour les mesures sur des mélanges ou des élastomères non solubles mais ayant la capacité de gonfler dans un solvant, est utilisée une sonde HRMAS 4mm z-grad permettant d'observer le proton et le carbone en mode découplé du proton. Les spectres sont acquis à des vitesses de rotation de 4000Hz à 5000Hz.

Pour les mesures sur des élastomères solubles, est utilisée une sonde RMN liquide permettant d'observer le proton et le carbone en mode découplé du proton.

La préparation des échantillons non solubles est faite dans des rotors remplis avec le matériau analysé et un solvant deutéré permettant le gonflement, en général du chloroforme deutéré (CDCl3). Le solvant utilisé doit toujours être deutéré et sa nature chimique peut être adaptée par l'homme du métier. Les quantités de matériau utilisées sont ajustées de façon à obtenir des spectres avec une sensibilité et une résolution suffisante.

Les échantillons solubles sont mis en solution dans un solvant deutéré (environ 25mg d'élastomère dans 1mL), en général du chloroforme deutéré (CDCl3). Le solvant ou coupage de solvant utilisé doit toujours être deutéré et sa nature chimique peut être adaptée par l'homme du métier.

Dans les deux cas (échantillon soluble ou échantillon gonflé):

Pour la RMN du proton est utilisée une séquence simple impulsion de 30°. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque impulsion est adapté pour obtenir une mesure quantitative.

Pour la RMN du carbone est utilisée une séquence simple impulsion 30° avec un découplage du proton uniquement pendant l'acquisition pour éviter les effets « Overhauser Nucléaire » (NOE) et rester quantitatif. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque impulsion est adapté pour obtenir une mesure quantitative.

Les mesures sont réalisées à 25°C.

### Nature des blocs thermoplastiques

Les polystyrènes sont obtenus à partir de monomères styréniques. Par monomère styrénique doit être entendu dans la présente description tout monomère comprenant du styrène, non substitué comme substitué ; parmi les styrènes substitués peuvent être cités par exemple les méthylstyrènes (par exemple l'o-méthylstyrène, le m-méthylstyrène ou le p-méthylstyrène, l'alpha-méthylstyrène, l'alpha-2-diméthylstyrène, l'alpha-4-diméthylstyrène ou le diphényléthylène), le para-tertio-butylstyrène, les chlorostyrènes (par exemple l'o-chlorostyrène, le m-chlorostyrène, le p-chlorostyrène, le 2,4-dichlorostyrène, le 2,6-dichlorostyrène ou le 2,4,6-trichlorostyrène), les bromostyrènes (par exemple l'o-bromostyrène, le m-bromostyrène, le p-bromostyrène, le 2,4-dibromostyrène, le 2,6-dibromostyrène ou les 2,4,6-tribromostyrène), les fluorostyrènes (par exemple l'o-fluorostyrène, le m-fluorostyrène, le p-fluorostyrène, le 2,4-difluorostyrène, le 2,6-difluorostyrène ou les 2,4,6-trifluorostyrène) ,le para-hydroxy-styrène ou encore les halogénométhylstryrènes (par exemple le p-chlorométhylstyrène ou le p-bromométhylstyrène)..

### Exemples de TPS

Le TPS de la couche adhésive du pneumatique selon l'invention est un copolymère dont la partie élastomère est insaturée, et qui comporte des blocs diènes et avantageusement des blocs styrènes, ces blocs diènes étant en particulier des blocs isoprène ou butadiène. Plus préférentiellement, cet élastomère TPS est choisi dans le groupe suivant, constitué de copolymères dibloc, triblocs linéaires ou étoilés : styrène/ butadiène (SB), styrène/ isoprène (SI), styrène/ butadiène/ isoprène (SBI), styrène/ butadiène/ styrène (SBS), styrène/ isoprène/ styrène (SIS), styrène/ butadiène/ isoprène/ styrène (SBIS) et les mélanges de ces copolymères.

Par exemple également, le TPS est un copolymère linéaire ou étoilé dont la partie élastomère comporte une partie saturée et une partie insaturée comme par exemple le styrène/ butadiène/ butylène (SBB), le styrène/ butadiène/ butylène/ styrène (SBBS) ou un mélange de ces copolymères.

À titre d'exemples d'élastomères TPS commercialement disponibles, on peut citer les élastomères de type SIS commercialisés par Kuraray, sous le nom « Hybrar 5125 », ou commercialisés par Kraton sous le nom de « D1161 » ou encore les élastomères de type SBS linéaire commercialisé par Polimeri Europa sous la dénomination « Europrene SOLT 166 » ou SBS étoilé commercialisés par Kraton sous la dénomination « D1184 ». On peut également citer les élastomères commercialisés par la société Dexco Polymers sous la dénomination de « Vector » (e.g. « Vector 4114 », « Vector 8508 »).

### Polyphénylène éther (PPE)

La composition de la couche adhésive a pour autre caractéristique essentielle de comporter, en combinaison avec l'élastomère TPS précédemment décrit, au moins un polyphénylène éther (noté en abrégé « PPE »).

Les PPE sont bien connus de l'homme du métier, ce sont des résines solides à température ambiante (23°C) compatibles avec les polymères styréniques, qui sont notamment utilisées pour augmenter la Tg d'élastomères TPS (voir par exemple *"*Thermal, Mechanical and Morphological Analyses of Poly(2,6-dimethyl-1,4-phenylene oxide)/Styrene- Butadiene-Styrene Blends", Tucker, Barlow and Paul, Macromolecules, 1988, 21, 1678- 1685).

Préférentiellement, le PPE utilisé ici possède une température de transition vitreuse (notée ci-après Tg) qui est supérieure à 150°C, plus préférentiellement supérieure à 180°C. Quant à sa masse moléculaire moyenne en nombre (Mn), elle est préférentiellement comprise entre 5 000 et 100 000 g/mol.

La masse moléculaire moyenne en nombre (Mn) est déterminée de manière connue, par chromatographie d'exclusion stérique (SEC). L'échantillon est préalablement solubilisé dans du tétrahydrofurane à une concentration d'environ 1 g/l ; puis la solution est filtrée sur filtre de porosité 0,45 µm avant injection. L'appareillage utilisé est une chaîne chromatographique "WATERS alliance". Le solvant d'élution est le tétrahydrofurane, le débit de 0,7 ml/min, la température du système de 35°C et la durée d'analyse de 90 min. On utilise un jeu de quatre colonnes WATERS en série, de dénominations commerciales "STYRAGEL" ("HMW7", "HMW6E" et deux "HT6E"). Le volume injecté de la solution de l'échantillon de polymère est de 100 µl. Le détecteur est un réfractomètre différentiel "WATERS 2410" et son logiciel associé d'exploitation des données chromatographiques est le système "WATERS MILLENIUM". Les masses molaires moyennes calculées sont relatives à une courbe d'étalonnage réalisée avec des étalons de polystyrène.

A titres d'exemples non limitatifs de polymères PPE utilisables dans la composition étanche selon un objet de l'invention, on peut citer notamment ceux choisis dans le groupe constitué par les poly(2,6-diméthyl-1,4-phénylène-éther), poly(2,6-diméthyl-co-2,3,6-triméthyl-1,4-phénylène-éther), poly-(2,3,6-triméthyl-1,4-phénylène-éther), poly(2,6-diéthyl-1,4- phénylène-éther), poly(2-méthyl-6-éthyl-1,4-phénylène-éther), poly(2-méthyl-6-propyl-1,4-phénylène-éther), poly-(2,6-dipropyl-1,4-phénylène-éther), poly(2-éthyl-6-propyl-1,4-phénylène-éther), poly(2,6-dilauryl-1,4-phénylène-éther), poly(2,6-diphényl-1,4-phénylène-éther), poly(2,6-diméthoxy-1,4-phénylène-éther), poly(1,6-diéthoxy-1,4-phénylène-éther), poly(2-méthoxy-6-éthoxy- 1,4-phénylène-éther), poly(2-éthyl-6- stéaryloxy-1,4-phénylène-éther), poly(2,6- dichloro-1,4-phénylène-éther), poly(2-méthyl-6-phényl-1,4-phénylène-éther), poly(2-éthoxy-1,4-phénylène-éther), poly(2-chloro-1,4-phénylène-éther), poly(2,6-dibromo-1,4-phénylène-éther), poly(3-bromo-2,6-diméthyl- 1,4-phénylène-éther), leurs copolymères respectifs, et les mélanges de ces homopolymères ou copolymères.

Selon un mode de réalisation particulier et préférentiel, le PPE utilisé est le poly(2,6-diméthyl-1,4-phénylène-éther). De tels PPE commercialement disponibles sont par exemple les « Xyron S202 » de la société Asahi Kasei, ou « Noryl SA120 » de la société Sabic.

De préférence, dans la composition de la couche adhésive, la quantité de polymère PPE est ajustée de telle manière que le taux massique de PPE soit compris entre 0,05 et 5 fois, plus préférentiellement entre 0,1 et 2 fois le taux massique de styrène présent dans l'élastomère thermoplastique styrénique à blocs. En dessous des minima préconisés, il n'y a pas d'effet visible de la présence de PPE et au-delà de 5 fois, on constate une augmentation trop forte de la rigidité de la couche adhésive.

Pour toutes ces raisons, le taux massique de PPE est plus préférentiellement encore compris entre 0,2 et 1,5 fois le taux massique de styrène dans l'élastomère thermoplastique styrénique à blocs.

Par taux massique de polyphénylène éther, on entend la masse du ou des polyphénylènes éthers dans la composition pour 100 g du ou des TPS.

De même le taux massique de styrène correspond à la masse des motifs styrènesubstitués ou non dans le ou les TPS pour 100 g du ou des TPS.

### Film de protection

Le film de protection doit être un film flexible résistant à la chaleur qui doit en plus avoir une adhésion limitée à la couche adhésive pour pouvoir en être décollé. La force de pelage du film de la couche adhésive est de préférence inférieure à 1 N/mm à 20°C et très préférentiellement inférieure à 0,5 N/mm.

Ce film permet de protéger la surface de la couche adhésive lors des opérations d'assemblage du pneumatique et sa vulcanisation en moule.

Il peut notamment être un film thermoplastique. Ce film thermoplastique est avantageusement choisi dans le groupe des polyesters et des films comportant au moins un polymère fluoré. L'homme du métier saura choisir son épaisseur pour obtenir le meilleur compromis entre sa flexibilité et sa résistance mécanique. Cette épaisseur est avantageusement comprise entre 10 et 300 µm.

La nature du film de protection peut être incompatible avec celle du TPS de la couche adhésive pour obtenir une adhésion limitée appropriée.

Dans une utilisation préférentielle, ce film est retiré juste avant la mise en place de l'organe à la surface du pneumatique pour éviter toute pollution de la surface de la couche adhésive. Le film a alors l'avantage de protéger la couche adhésive pendant toutes les phases de transport et de stockage des pneumatiques.

De préférence, la Tg (ou Tf, le cas échéant) du film de protection est supérieure à la température de cuisson du mélange caoutchouteux de la zone d'accueil de la surface du pneumatique. Une température de 200°C pour la Tg (ou Tf, le cas échéant) permet au film de résister aux températures usuelles de vulcanisation des pneumatiques pour véhicules de tourisme.

Comme exemple de film polyester, on peut utiliser les films commercialisés sous la marque Mylar avec une épaisseur comprise entre 0,03 et 0,2 mm. Un tel film de polyester a une température de fusion supérieure à 230 °C.

On peut choisir comme polymères fluorés les copolymères éthylène-propylène fluoré (FEP). Avantageusement, le film comporte un copolymère de tétrafluoroéthylène (TFE) et d'hexafluoropropylène (HFP).

Ces polymères présentent de remarquables propriétés anti-collantes.

Un exemple de film adapté est le film A5000 de Aerovac Systèmes France. Ce film comporte un copolymère éthylène-propylène fluoré ou FEP. Ce film a une température maximale d'utilisation de l'ordre de 204 °C et a un allongement rupture supérieur à 300%. Son épaisseur est de 25 µm. Ces caractéristiques lui permettent d'être mis en place directement sur le tambour de confection du bandage pneumatique dans le cas spécifique de zone d'accueil placée à la surface de la gomme intérieure du pneumatique.

Le tableau suivant indique des exemples de films appropriés pour l'invention.

| Dénomination | Fournisseur | nature | épaisseur | T max | allongement |
|---|---|---|---|---|---|
| A5000 | Aerovac | FEP | 25 µm | 260 °C | > 300% |
| A6000 | Aerovac | ETFE | 12, 15 et 20 µm | 230 °C | > 200% |
| MR Film | Aerovac | PTFE | 25 µm | 315 °C | > 550 % |
| FEP100 | Dupont | FEP | 25 µm | 260 °C | > 300% |
| FEP100 | Dupont | FEP | 12.5 µm | 260 °C | > 300% |
| Norton FEP 0.001 | Saint Gobain | FEP | 25 µm | 260 °C | > 300% |
| Norton FEP 0.0005 | Saint Gobain | FEP | 12.5 µm | 260 °C | > 300% |

Le film de protection permet de séparer la couche adhésive de tout contact avec le tambour de fabrication du bandage pneumatique puis avec la membrane de cuisson du moule de vulcanisation. La nature incompatible du film de protection relativement à la couche adhésive lui permet d'être retiré de la surface intérieure du bandage pneumatique après la vulcanisation. Le retrait de ce film de protection redonne à la couche adhésive toutes ses propriétés. Le film de protection peut être enlevé sans se déchirer.

### Composition de la couche adhésive du pneumatique

La couche adhésive du pneumatique selon l'invention a pour caractéristique essentielle de comporter un élastomère thermoplastique styrénique à blocs (TPS).

Le terme « un » doit être entendu comme « au moins un », c'est-à-dire un ou plusieurs élastomères thermoplastiques à blocs. À titre d'exemple, il est avantageux d'utiliser un mélange de TPS dont l'un a une masse moléculaire en nombre Mn appropriée pour une bonne tenue en température et d'un TPS de faible masse Mn pour favoriser un bon collage entre les couches adhésive du pneumatique et de fixation de l'organe.

Un ou plusieurs élastomères TPS peuvent à eux seuls constituer une composition de couche adhésive du pneumatique.

De préférence, le taux massique de polyphénylène éther dans la composition adhésive représente entre 0,05 et 5 fois le taux massique de styrène présent dans l'élastomère thermoplastique styrénique de la composition adhésive.

Très préférentiellement, le taux massique de polyphénylène éther représente entre 0,1 et 2 fois, et très très préférentiellement entre 0,2 et 1,5 fois le taux massique de styrène présent dans l'élastomère thermoplastique styrénique.

La présence du polyphénylène éther dans la composition adhésive devrait augmenter la viscosité en température de la composition adhésive et ainsi pénaliser l'interpénétration de la couche adhésive et de la couche caoutchouteuse de la surface du pneumatique, limitant l'adhésion de ces deux couches. Or de façon très surprenante, on constate au contraire une amélioration de l'adhésion à des températures de service inférieures à 100°C.

À titre minoritaire, la composition de la couche adhésive peut comporter un élastomère diénique usuel tel un SBR, un polybutadiène ou un polyisoprène naturel ou synthétique. De façon très préférentielle, le taux d'élastomère diénique dans la composition est inférieur à 20 parties pour cent parties en masse d'élastomères de la composition (pce). Bien entendu, le ou les TPE de la composition sont pris en compte dans les élastomères de la composition.

De plus, selon un mode de réalisation préférentiel de l'invention, la composition de la couche adhésive peut comporter également, à titre d'agent plastifiant, une huile d'extension (ou huile plastifiante) dont la fonction est de faciliter la mise en joint de la couche adhésive et de la couche de fixation de l'organe, particulièrement par un abaissement du module et une augmentation du pouvoir tackifiant.

On peut utiliser toute huile d'extension, à caractère faiblement polaire, apte à étendre, plastifier des élastomères, notamment thermoplastiques. À température ambiante (23°C), ces huiles, plus ou moins visqueuses, sont des liquides (c'est-à-dire, pour rappel, des substances ayant la capacité de prendre à terme la forme de leur contenant), par opposition notamment à des résines ou des caoutchoucs qui sont par nature solides.

De préférence, l'huile d'extension est choisie dans le groupe constitué par les huiles polyoléfiniques (c'est-à-dire issues de la polymérisation d'oléfines, monooléfines ou dioléfines), les huiles paraffiniques, les huiles naphténiques (à basse ou haute viscosité), les huiles aromatiques, les huiles minérales, et les mélanges de ces huiles. L'homme du métier saura ajuster la nature et la quantité d'huile d'extension en fonction des conditions particulières d'usage de la couche adhésive.

On utilise préférentiellement une huile du type caoutchouc isoprénique liquide (« LIR »). À titre d'exemple, les LIR 30 et 50, respectivement de masses moléculaires moyenne en nombre de 30 000 et 50 000 g/mol sont commercialisées par Kuraray.

La composition de la couche adhésive peut comporter par ailleurs les divers additifs usuellement présents dans les compositions à base d'élastomères thermoplastiques à blocs connues de l'homme du métier. On citera par exemple des charges renforçantes telles que du noir de carbone ou de la silice, des charges non renforçantes ou inertes ou encore fibrillaires, des agents colorants avantageusement utilisables pour la coloration de la composition, des plastifiants autres que les huiles d'extension précitées, des résines tackifiantes, des agents de protection tels que antioxydants ou antiozonants, anti-UV, divers agents de mise en œuvre ou autres stabilisants, ou encore des promoteurs aptes à favoriser l'adhésion au reste de la structure dupneumatique.

L'usage de résines tackifiantes peut être particulièrement intéressant pour régler les températures de ramollissement ainsi que les niveaux d'adhésion nécessaires des couches adhésives ou de fixation.

### Composition de la couche de fixation de l'organe

La composition de la couche de fixation de l'organe a pour caractéristique essentielle de comporter un TPS.

De préférence, le ou les élastomères thermoplastiques à blocs styréniques sont choisis de telle sorte que la force d'adhésion, c'est-à-dire la force nécessaire pour séparer les deux couches adhésive et de fixation dans un test de pelage est supérieure à 2 N/mm à 60°C.

Selon un mode de réalisation préférentiel, les blocs thermoplastiques des TPS des couches de fixation et adhésive sont compatibles (c'est-à-dire similaire du fait de leurs masses, de leurs polarités ou de leurs Tg) avec les blocs thermoplastiques du ou des élastomères thermoplastiques styréniques à blocs de la composition de la couche adhésive du pneumatique.

Le ou les TPS de la couche de fixation de l'organe peuvent comporter des blocs élastomères insaturés comme celui ou ceux de la couche adhésive du pneumatique. Mais, il peuvent aussi comporter des blocs élastomères saturés comme précédemment décrit.

Selon un mode de réalisation préférentiel, les blocs thermoplastiques du ou des élastomères thermoplastiques à blocs de la composition de la couche de fixation de l'organe sont identiques aux blocs thermoplastiques styréniques du ou des TPS de la composition de la couche adhésive du pneumatique.

Selon un mode de réalisation très préférentiels, les élastomères thermoplastiques à blocs majoritaires des couches de fixation et adhésive sont identiques.

La composition de la couche de fixation de l'organe peut aussi comporter des élastomères diéniques saturés ou insaturés, à titre minoritaire, des huiles ou des additifs divers tels que précédemment décrits.

### Description des Figures

Des éléments complémentaires de l'invention sont maintenant décrits avec l'aide du dessin annexé, présenté à titre non limitatif, dans lequel :
- la figure 1 représente de manière très schématique (sans respect d'une échelle spécifique), une coupe radiale d'un pneumatique conforme à un mode de réalisation de l'invention ;
- la figure 2 présente en coupe radiale partielle une ébauche de pneumatique conforme à un mode de réalisation de l'invention ;
- la figure 3 illustre un organe avec une couche de fixation ; et
- la figure 4 montre l'organe fixé à la surface du pneumatique.

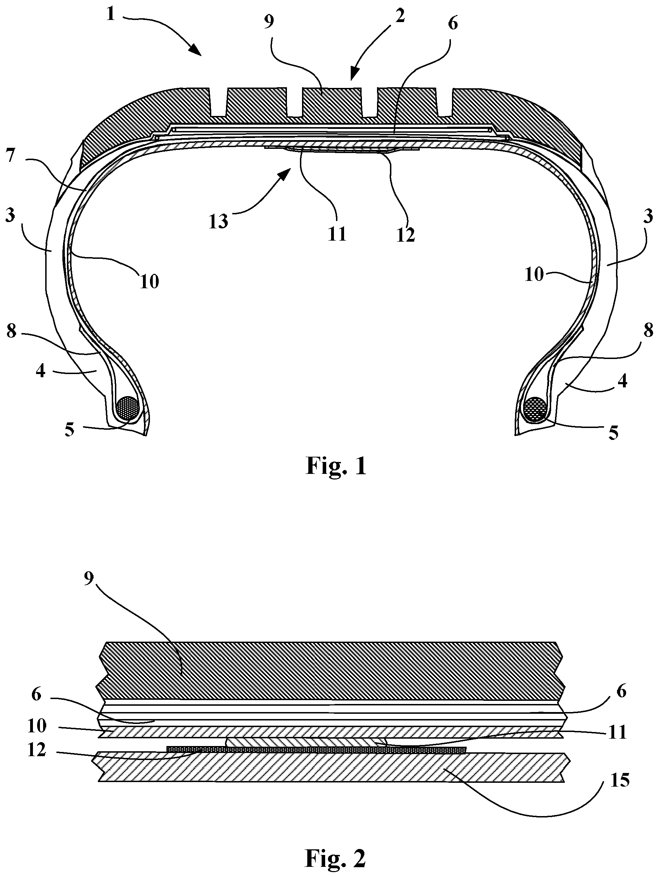

La figure 1 représente de manière schématique une coupe radiale d'un bandage pneumatique ou pneumatique incorporant à une zone d'accueil 13 donnée une couche adhésive avec un film de protection selon un mode de réalisation de l'invention.

Ce pneumatique 1 comporte un sommet 2 renforcé par une armature de sommet ou ceinture 6, deux flancs 3 et deux bourrelets 4, chacun de ces bourrelets 4 étant renforcé avec une tringle 5. L'armature de sommet 6 est surmontée radialement extérieurement d'une bande de roulement caoutchouteuse 9. Une armature de carcasse 7 est enroulée autour des deux tringles 5 dans chaque bourrelet 4, le retournement 8 de cette armature 7 étant par exemple disposé vers l'extérieur du pneumatique 1. L'armature de carcasse 7 est de manière connue en soi constituée d'au moins une nappe renforcée par des câbles dits « radiaux », par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6). Une couche étanche 10 s'étend d'un bourrelet à l'autre radialement intérieurement relativement à l'armature de carcasse 7.

Le pneumatique 1 est tel que sa paroi interne comporte dans une zone d'accueil 13 donnée une couche adhésive 11. La couche adhésive 11 est recouverte radialement intérieurement par un film de protection 12. L'épaisseur de la couche adhésive est de préférence comprise entre 0,1 et 4 mm, et très préférentiellement entre 0,2 et 2 mm. L'homme de l'art saura adapter cette épaisseur en fonction de la nature, de la géométrie et de la masse de l'organe ainsi que de l'épaisseur de la couche de fixation de l'organe.

La surface de la zone d'accueil 13 et donc de la couche adhésive 11 doit être suffisante pour obtenir une fixation robuste de l'organe, l'homme du métier saura ajuster la dimension de la couche adhésive en fonction de la taille et de la masse de l'organe à fixer.

La couche adhésive 11 est constituée d'un copolymère majoritairement triblocs styrène/ isoprène/ styrène SIS de grade D1161 ou D1163 de chez Kraton.

Le film de protection séparable 12 est un film thermoplastique comportant à titre d'exemple un polymère fluoré. Le film thermoplastique est extensible avec une faible rigidité et a un comportement plastique. Ce film doit avoir une Tg (ou Tf, le cas échéant) supérieure à la température de vulcanisation du bandage pneumatique. Un exemple de film adapté est le film A5000 de Aerovac Systèmes France. Ce film comporte un copolymère éthylène-propylène fluoré ou FEP. Ce film a une température maximale d'utilisation de l'ordre de 204 °C et a un allongement rupture supérieur à 300%. Son épaisseur est de 25 µm. Ces caractéristiques lui permettent, dans un exemple de réalisation de l'invention, d'être mis en place directement soit sur le tambour de confection du bandage pneumatique.

Comme l'indique la figure 2, le film de protection 12 déborde de la zone d'accueil de la couche adhésive. Le débordement doit être supérieur à 2 mm pour garantir la non-contamination de cette couche adhésive pendant la vulcanisation du pneumatique.

Le film de protection séparable 12 permet de séparer la couche adhésive de tout contact avec le tambour de fabrication du pneumatique puis avec la membrane de cuisson du moule de vulcanisation. La nature particulière de ce film de protection lui permet d'être retiré de la surface intérieure du pneumatique après la vulcanisation. Le retrait de ce film de protection redonne à la surface de la couche adhésive toutes ses propriétés. Le film de protection 12 peut être enlevé sans se déchirer.

Le bandage pneumatique de la figure 1 peut être fabriqué, comme l'indique la figure 2, en intégrant la couche adhésive dans une ébauche non vulcanisée de pneumatique 1 en utilisant un tambour de fabrication et les autres techniques usuelles dans la fabrication des bandages pneumatiques. Plus précisément, le film de protection séparable 12 disposé radialement le plus à l'intérieur est appliqué en premier sur le tambour de fabrication 15. On met en place ensuite la couche adhésive 11 .On applique ensuite, successivement, tous les autres composants usuels du bandage pneumatique.

Après la conformation, les nappes sommet et la bande de roulement sont mises en place sur l'ébauche du pneumatique. L'ébauche ainsi achevée est placée dans un moule de cuisson et est vulcanisée. Pendant la vulcanisation, le film de protection protège la membrane de cuisson du moule de tout contact avec la couche adhésive.

À la sortie du moule de cuisson, le film de protection 12 est toujours attaché à la couche adhésive 11.

Le film de protection 12 peut être aisément retiré à la sortie du moule de vulcanisation du pneumatique. Il est aussi possible, et préférable, de laisser en place ce film de protection jusqu'au moment de la fixation de l'organe.

Le film de protection et la couche adhésive peuvent aussi être appliqués à la zone d'accueil choisie à la surface du pneumatique après la conformation de l'ébauche de pneumatique et avant l'introduction de celle-ci dans le moule de vulcanisation.

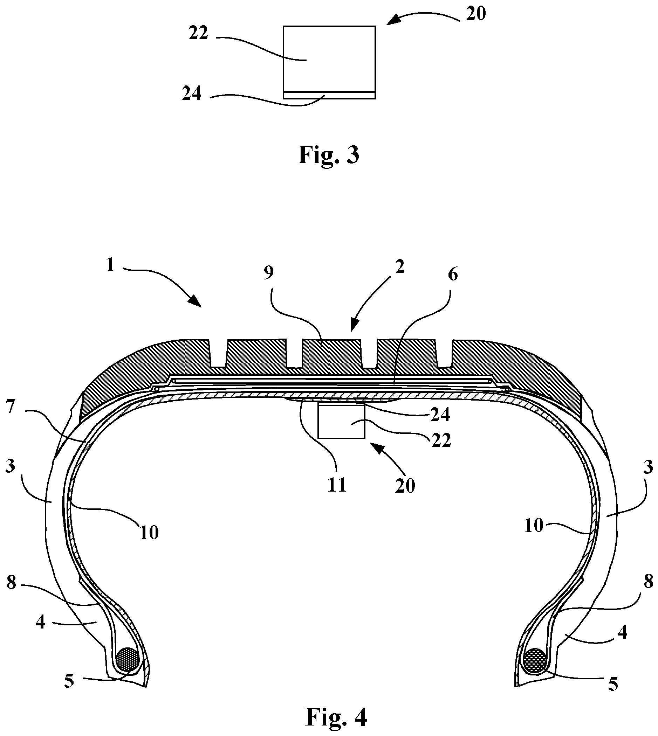

La figure 3 présente schématiquement un organe 20 comportant un boîtier 22 et une couche de fixation 24. Le matériau de la couche de fixation 24 est à base d'un élastomère thermoplastique à blocs dont les blocs thermoplastiques rigides sont de même nature que les blocs rigides du ou des TPS de la couche adhésive du pneumatique. La couche de fixation est préférentiellement à base du même TPS que celui de la couche adhésive. Les couches d'adhésion et de fixation sont constituées d'un TPS majoritairement triblocs à base de styrène et d'isoprène (SIS). L'épaisseur de la couche de fixation est de préférence entre 0,5 et 4 mm, et très préférentiellement entre 2 et 3 mm. L'homme de l'art saura adapter l'épaisseur de la couche de fixation en fonction de celle de la couche adhésive et de la taille et de la masse de l'organe.

La figure 4 présente l'ensemble du pneumatique de la figure 1 et de l'organe 20 fixé sur sa surface intérieure sur la gomme intérieure.

La fixation de l'organe 20 à la surface du pneumatique est réalisée aisément et rapidement :
- on retire tout ou partie du film de protection 12 de la couche adhésive 11 du pneumatique 1 ;
- on échauffe les couches d'adhésion 11 du pneumatique et de fixation 24 de l'organe jusqu'à des températures supérieures aux Tg (ou Tf, le cas échéant) de ces élastomères thermoplastiques à blocs ; ce chauffage peut être réalisé par tout moyen (soufflage d'air chaud, rayonnement infra-rouge...) ; les zones superficielles des deux couches d'adhésion et de fixation sont alors au-delà de leurs températures de mise en œuvre et sont ainsi ramollies ;
- on met en contact la couche de fixation et la couche adhésive en appliquant une pression de contact ; cette mise en contact permet aux deux couches de s'interpénétrer en raison de la forte mobilité moléculaire liée à la température ; et
- on maintient le contact jusqu'au refroidissement des deux couches d'adhésion et de fixation en dessous des Tg (ou Tf le cas échéant) des TPS.

La pression de contact est de préférence supérieure à 0,05 bar. L'homme de l'art saura l'ajuster en fonction des couches de fixation et adhésive utilisées.

Dès que le refroidissement est effectif, l'organe est fixé de façon robuste à la surface du pneumatique.

Les exemples présentés, l'organe est fixé à la surface interne du pneumatique, il est aussi possible de le placer sur une surface externe du pneumatique par exemple sur le flanc du pneumatique.

### Tests

### Test de pelage manuel

Des tests d'adhésion (tests de pelage) ont été conduits pour tester l'aptitude de la couche adhésive à adhérer après cuisson à une couche d'élastomère diénique, plus précisément à une composition de caoutchouc usuelle pour une gomme intérieure (inner liner) de pneumatique, à base de caoutchouc butyle (copolymère d'isobutylène et d'isoprène) comportant en outre les additifs usuels (charge, soufre, accélérateur, ZnO, acide stéarique, antioxydant). Bien entendu, ce test peut être adapté au cas où l'organe doit être placé sur le flanc du pneumatique, dans ce cas, on utilisera pour réaliser les éprouvettes une couche de mélange caoutchouteux de flanc au lieu d'une couche de gomme intérieure usuelle.

Les éprouvettes de pelage (du type pelage à 180°) ont été réalisées par empilage des produits suivants :
- un tissu de type nappe carcasse tourisme ;
- une couche de gomme intérieure usuelle (1 mm) ;
- une couche adhésive en SIS (1 mm) ;
- une couche de gomme intérieure usuelle (1 mm) ; et
- un tissu de type nappe carcasse tourisme.

Une amorce de rupture est placée à l'interface entre l'une des couches de gomme intérieure et la couche adhésive.

Les éprouvettes sont ensuite vulcanisées à 140 °C pendant 50 minutes et sous une pression de 16 bars dans une presse à plateaux.

Des bandes de 30 mm de largeur ont été découpées au massicot. Les deux côtés de l'amorce de rupture ont été ensuite placées dans les mors d'une machine de traction de marque Instron®. Les essais sont réalisés à température ambiante et à une vitesse de traction de 100 mm/min. On enregistre les efforts de traction et on norme ceux-ci par la largeur de l'éprouvette. On obtient une courbe de force par unité de largeur (en N/mm) en fonction du déplacement de traverse mobile de la machine de traction (entre 0 et 200 mm). La valeur d'adhésion retenue correspond à l'initiation de la rupture au sein de l'éprouvette et donc à la valeur maximale de cette courbe.

Les mesures de pelage sont effectuées à température ambiante et à 60°C.

### Exemples :

- C-1 est une composition usuelle de gomme intérieure ;
- C-2 est une couche adhésive de référence sans PPE ;
- C-3 est une autre couche adhésive de référence sans PPE ;
- I-1 et I-2 sont des couches adhésives conformes à l'invention avec différents SIS et des taux variables de polyphénylène éther.

**Tableau 1 : compositions en pce**

| Composition | C-1 | C-2 | C-3 | I-1 | I-2 |
|---|---|---|---|---|---|
| Élastomère butyl (1) | 100 | | | | |
| Noir de carbone (N772) | 50 | | | | |
| Oxyde de zinc | 1,5 | | | | |
| Acide stéarique | 1,5 | | | | |
| Sulfénamide (2) | 1,2 | | | | |
| Soufre | 1,5 | | | | |
| SIS (3) | | 100 | | 100 | |
| SIS (4) | | | 100 | | 100 |
| PPE (5) | | | | 7.5 | 15 |

| | | | | | |
|---|---|---|---|---|---|
| (1) Copolymère bromé d'isobutylène et d'isoprène « BROMOBUTYL 2222 » commercialisé par la société EXXON CHEMICAL Co ; (2) N-dicyclohexyl-2-benzothiazol-sulfénamide ("Santocure CBS" de la société Flexsys) ; (3) SIS de la société Kraton et de référence « D1161 » ; (4) SIS de la société Kraton et de référence « D1163 » ; (5) poly(2,6- diméthyl-1,4-phénylène-éther) de la société SABIC et de référence « Noryl SA 120 ». | | | | | |

### Résultats des tests

Les valeurs d'adhésion mesurées de I-1 sur C-1 et de C-2 sur C-1 sont comparables à 20°C mais multipliées par un facteur supérieur à 2 à 60°C à l'avantage de la couche adhésive comportant 7,5 pce de PPE. Ce résultat confirme l'intérêt de la présence de polyphénylène éther dans la couche adhésive pour obtenir une très bonne adhésion de la couche adhésive à base de TPS sur une gomme intérieure.

Dans le cas de I-2, le taux de polyphénylène éther est plus élevé et les résultats sont largement confirmés : à 20°C, une amélioration très sensible est obtenue (facteur 2) et cette amélioration relative est amplifiée à 60°C (facteur 3). La valeur absolue des efforts d'adhésion est elle-aussi remarquable à 60°C : 6 N/mm. Cette valeur est largement suffisante pour avoir une fixation fiable en service d'un organe à la surface d'un pneumatique.

**Tableau 2 test de pelage**

| Évaluation de l'adhésion entre les surfaces | C-2 / C-1 | I-1/ C-1 | | C-3/ C-1 | I-2/ C-1 |
|---|---|---|---|---|---|
| Valeurs d'adhésion (N/mm) à 20°C | 12 | 13 | | 7 | 14 |
| Valeurs d'adhésion (N/mm) à 60°C | 3 | 7 | | 2 | 6 |

Les résultats des tests de pelage confirment tout d'abord l'intérêt d'utiliser comme couche adhésive et/ou de fixation une composition thermoplastique à blocs mise en place comme décrit. Les valeurs d'adhésion obtenues sont remarquables, mais ces valeurs diminuent fortement avec la température d'essai. En présence de polyphénylène éther, on observe une augmentation des forces d'adhésion tant à température ambiante qu'à la température de 60°C.

L'invention permet ainsi une fixation rapide et réversible d'organes à la surface d'un pneumatique sans les inconvénients liés à la préparation de la surface de contact.

Cette fixation est réversible, c'est-à-dire que les deux couches adhésive et de fixation peuvent être désassemblées par chauffage au-dessus des Tg de leurs blocs rigides (ou Tf le cas échéant) puis passage d'un outil. La couche adhésive ainsi révélée peut ensuite être à nouveau utilisée pour coller le même organe ou un autre.

Enfin, ce mode de fixation procure une grande liberté quant à la géométrie et les fonctions de l'organe du fait de la fixation post vulcanisation.

## Revendications

1. Pneumatique comportant une surface intérieure et/ou extérieure avec une zone d'accueil, une couche adhésive disposée sur ladite zone d'accueil et un film de protection disposé sur ladite couche adhésive, **caractérisé en ce que** la composition de ladite couche adhésive est à base d'un élastomère thermoplastique styrénique à blocs (TPS) comportant un bloc élastomère diénique avec un taux molaire de motifs diéniques relativement à l'ensemble des motifs du bloc élastomère supérieur à 10% et **en ce que** ladite composition comporte un ou des polyphénylènes éthers (« PPE »).

2. Pneumatique selon la revendication 1, dans lequel le taux molaire de motifs diéniques du bloc élastomère de la composition de la couche adhésive relativement à l'ensemble des motifs du bloc élastomère est supérieur à 50%.

3. Pneumatique selon l'une des revendications 1 et 2, dans lequel le diène du bloc élastomère est choisi dans les diènes conjugués en C4-C12.

4. Pneumatique selon l'une quelconque des revendications précédentes, dans lequel le bloc élastomère est un copolymère obtenu par copolymérisation d'un ou plusieurs diènes conjugués entre eux ou avec un ou plusieurs composés vinyle aromatique ayant de 8 à 20 atomes de carbone.

5. Pneumatique selon l'une quelconque des revendications précédentes, dans lequel le diène du bloc élastomère est choisi dans le groupe des butadiène, isoprène et de leurs mélanges.

6. Pneumatique selon l'une quelconque des revendications précédentes, dans lequel le bloc élastomère est à base d'isoprène.

7. Pneumatique selon l'une quelconque des revendications précédentes, dans lequel le polyphénylène éther a une température de transition vitreuse supérieure à 150°C, de préférence supérieure à 180°C.

8. Pneumatique selon la revendication 7, dans lequel le polyphénylène éther est choisi dans le groupe constitué par les poly(2,6-diméthyl-1,4-phénylène-éther), poly(2,6-diméthyl-co-2,3,6-triméthyl-1,4-phénylène-éther), poly-(2,3,6-triméthyl-1,4-phénylène-éther), poly(2,6-diéthyl-1,4-phénylène-éther), poly(2-méthyl-6-éthyl-1,4-phénylène-éther), poly(2-méthyl-6-propyl- 1,4-phénylène-éther), poly-(2,6-dipropyl-1,4-phénylène-éther), poly(2-éthyl-6-propyl-1,4- phénylène-éther), poly(2,6-dilauryl-1,4-phénylène-éther), poly(2,6-diphényl-1,4-phénylène-éther), poly(2,6-diméthoxy-1,4-phénylène-éther), poly(1,6-diéthoxy-1,4-phénylène-éther), poly(2-méthoxy-6-éthoxy- 1,4-phénylène-éther), poly(2-éthyl-6-stéaryloxy-1,4-phénylène-éther), poly(2,6- dichloro-1,4-phénylène-éther), poly(2-méthyl-6-phényl-1,4-phénylène-éther), poly(2- éthoxy-1,4-phényléne-éther), poly(2-chloro- 1,4-phénylène-éther), poly(2,6-dibromo-1,4-phénylène-éther), poly(3-bromo-2,6-diméthyl- 1,4-phénylène-éther), leurs copolymères respectifs, et les mélanges de ces homopolymères ou copolymères.

9. Pneumatique selon la revendication 8, dans lequel le polyphénylène éther est le poly(2,6-diméthyl-1,4-phénylène-éther).

10. Pneumatique selon l'une quelconque des revendications précédentes, dans lequel le taux massique de polyphénylène éther représente entre 0,05 et 5 fois le taux massique de styrène présent dans l'élastomère thermoplastique styrénique.

11. Pneumatique selon l'une quelconque des revendications précédentes, dans lequel le film de protection est un film thermoplastique choisi de telle sorte que la force de pelage dudit film de la couche adhésive est inférieure à 1 N/mm à 20°C et préférentiellement inférieure à 0,5 N/mm.

12. Ensemble d'un pneumatique selon l'une quelconque des revendications 1 à 11, sans film de protection, et d'un organe destiné à être fixé à la surface du pneumatique comprenant une couche de fixation dont la composition est à base d'un élastomère thermoplastique styrénique à blocs (TPS).

13. Ensemble d'un pneumatique selon l'une quelconque des revendications 1 à 11, sans film de protection, et d'un organe destiné à être fixé à la surface du pneumatique comprenant une couche de fixation dont la composition est à base d'un élastomère thermoplastique styrénique à blocs (TPS) identique audit élastomère thermoplastique à blocs de la composition de ladite couche adhésive de la zone d'accueil dudit pneumatique.

14. Procédé de fixation d'un organe selon l'une quelconque des revendications 12 à 13 à la surface d'un pneumatique selon l'une quelconque des revendications 1 à 11, dans lequel :
- on retire tout ou partie du film de protection ;
- on porte lesdites couche adhésive et couche de fixation à une température supérieure aux températures de ramollissement desdits blocs thermoplastiques desdits élastomères thermoplastiques à blocs ; et
- on met en contact, en appliquant une pression, la couche de fixation et la couche adhésive.

## Patentansprüche

1. Reifen, umfassend eine Innenfläche und/oder Außenfläche mit einem Aufnahmebereich, eine Klebeschicht, die auf dem Aufnahmebereich angeordnet ist, und eine Schutzfolie, die auf der Klebeschicht angeordnet ist, **dadurch gekennzeichnet, dass** die Zusammensetzung der Klebeschicht auf einem thermoplastischen Styrol-Blockelastomer (TBS) mit einem Dienelastomerblock mit einem molaren Gehalt an Dieneinheiten, bezogen auf alle Einheiten des Elastomerblocks, von mehr als 10 % basiert und dass die Zusammensetzung ein oder mehrere Polyphenylenether ("PPE") umfasst.

2. Reifen nach Anspruch 1, wobei der molare Gehalt des Elastomerblocks an die in Einheiten, bezogen auf alle Einheiten des Elastomerblocks, mehr als 50 % beträgt.

3. Reifen nach einem der Ansprüche 1 und 2, wobei das Dien des Elastomerblocks aus den konjugierten C4-C12-Dienen ausgewählt ist.

4. Reifen nach einem der vorhergehenden Ansprüche, wobei es sich bei dem Elastomerblock um ein durch Copolymerisation von einem oder mehreren konjugierten Dienen miteinander oder mit einer oder mehreren vinylaromatischen Verbindungen mit 8 bis 20 Kohlenstoffatomen erhaltenes Copolymer handelt.

5. Reifen nach einem der vorhergehenden Ansprüche, wobei das Dien des Elastomerblocks aus der Gruppe bestehend aus Butadien, Isopren und Mischungen davon ausgewählt ist.

6. Reifen nach einem der vorhergehenden Ansprüche, wobei der Elastomerblock auf Isopren basiert.

7. Reifen nach einem der vorhergehenden Ansprüche, wobei der Polyphenylenether eine Glasübergangstemperatur von mehr als 150 °C, vorzugsweise mehr als 180 °C, aufweist.

8. Reifen nach Anspruch 7, wobei der Polyphenylenether aus der Gruppe bestehend aus Poly(2,6-dimethyl-1,4-phenylenether), Poly(2,6-dimethyl-co-2,3,6-trimethyl-1,4-phenylenether), Poly-(2,3,6-trimethyl-1,4-phenylenether), Poly(2,6-diethyl-1,4-phenylenether), Poly(2-methyl-6-ethyl-1,4-phenylenether), Poly(2-methyl-6-propyl-1,4-phenylenether), Poly(2,6-dipropyl-1,4-phenylenether), Poly(2-ethyl-6-propyl-1,4-phenylenether), Poly(2,6-dilauryl-1,4-phenylenether), Poly(2,6-diphenyl-1,4-phenylenether), Poly(2,6-dimethoxy-1,4-phenylenether), Poly(1,6-diethoxy-1,4-phenylenether), Poly(2-methoxy-6-ethoxy-1,4-phenylenether), Poly(2-ethyl-6-stearyloxy-1,4-phenylenether), Poly(2,6-dichlor-1,4-phenylenether), Poly(2-methyl-6-phenyl-1,4-phenylenether), Poly(2-ethoxy-1,4-phenylenether), Poly(2-chlor-1,4-phenylenether), Poly(2,6-dibrom-1,4-phenylenether), Poly(3-brom-2,6-dimethyl-1,4-phenylenether), den jeweiligen Copolymeren davon und den Mischungen dieser Homopolymere oder Copolymere ausgewählt ist.

9. Reifen nach Anspruch 8, wobei es sich bei dem Polyphenylenether um Poly(2,6-dimethyl-1,4-phenylenether) handelt.

10. Reifen nach einem der vorhergehenden Ansprüche, wobei der Massengehalt an Polyphenylenether zwischen dem 0,05- und 5-fachen des Massengehalts an Styrol in dem thermoplastischen Styrolelastomer liegt.

11. Reifen nach einem der vorhergehenden Ansprüche, wobei es sich bei der Schutzfolie um eine thermoplastische Schutzfolie handelt, die derart gewählt ist, dass die Abziehkraft der Folie von der Klebeschicht bei 20 °C weniger als 1 N/mm und vorzugsweise weniger als 0,5 N/mm beträgt.

12. Anordnung aus einem Reifen nach einem der Ansprüche 1 bis 11 ohne Schutzfolie und einem auf der Oberfläche des Reifens zu befestigenden Glied, das eine Befestigungsschicht aufweist, deren Zusammensetzung auf einem thermoplastischen Styrol-Blockelastomer (TBS) basiert.

13. Anordnung aus einem Reifen nach einem der Ansprüche 1 bis 11 ohne Schutzfolie und einem auf der Oberfläche des Reifens zu befestigenden Glied, das eine Befestigungsschicht aufweist, deren Zusammensetzung auf einem thermoplastischen Styrol-Blockelastomer (TBS) basiert, das mit dem thermoplastischen Blockelastomer der Zusammensetzung der Klebeschicht des Aufnahmebereichs des Reifens identisch ist.

14. Verfahren zur Befestigung eines Glieds nach einem der Ansprüche 12 bis 13 auf der Oberfläche eines Reifens nach einem der Ansprüche 1 bis 11, bei dem man:
- die Schutzfolie ganz oder teilweise abzieht;
- die Klebeschicht und die Befestigungsschicht auf eine über den Erweichungstemperaturen der thermoplastischen Blöcke der thermoplastischen Blockelastomere liegende Temperatur bringt und
- die Befestigungsschicht und die Klebeschicht unter Ausübung von Druck in Kontakt bringt.

## Claims

1. Tyre comprising an inner surface and/or outer surface with an accommodating region, an adhesive layer arranged on said accommodating region and a protective film arranged on said adhesive layer, **characterized in that** the composition of said adhesive layer is based on a block thermoplastic styrene (TPS) elastomer comprising a diene elastomer block with a molar content of diene units relative to all of the units of the elastomer block of greater than 10%, and **in that** said composition comprises one or more polyphenylene ethers (PPEs).

2. Tyre according to Claim 1, in which the molar content of diene units of the elastomer block of the composition of the adhesive layer relative to all of the units of the elastomer block is greater than 50%.

3. Tyre according to either of Claims 1 and 2, in which the diene of the elastomer block is selected from the C4-C12 conjugated dienes.

4. Tyre according to any one of the preceding claims, in which the elastomer block is a copolymer obtained by copolymerization of one or more conjugated dienes with one another or with one or more vinylaromatic compounds having from 8 to 20 carbon atoms.

5. Tyre according to any one of the preceding claims, in which the diene of the elastomer block is selected from the group consisting of butadienes, isoprenes, and mixtures thereof.

6. Tyre according to any one of the preceding claims, in which the elastomer block is based on isoprene.

7. Tyre according to any one of the preceding claims, in which the polyphenylene ether has a glass transition temperature of greater than 150°C, preferably of greater than 180°C.

8. Tyre according to Claim 7, in which the polyphenylene ether is selected from the group consisting of poly(2,6-dimethyl-1,4-phenylene ether), poly(2,6-dimethyl-co-2,3,6-trimethyl-1,4-phenylene ether), poly-(2,3,6-trimethyl-1,4-phenylene ether), poly(2,6-diethyl-1,4-phenylene ether), poly(2-methyl-6-ethyl-1,4-phenylene ether), poly(2-methyl-6-propyl-1,4-phenylene ether), poly(2,6-dipropyl-1,4-phenylene ether), poly(2-ethyl-6-propyl-1,4-phenylene ether), poly(2,6-dilauryl-1,4-phenylene ether), poly(2,6-diphenyl-1,4-phenylene ether), poly(2,6-dimethoxy-1,4-phenylene ether), poly(1,6-diethoxy-1,4-phenylene ether), poly(2-methoxy-6-ethoxy-1,4-phenylene ether), poly(2-ethyl-6-stearyloxy-1,4-phenylene ether), poly(2,6-dichloro-1,4-phenylene ether), poly(2-methyl-6-phenyl-1,4-phenylene ether), poly(2-ethoxy-1,4-phenylene ether), poly(2-chloro-1,4-phenylene ether), poly(2,6-dibromo-1,4-phenylene ether), poly(3-bromo-2,6-dimethyl-1,4-phenylene ether), their respective copolymers and the mixtures of these homopolymers or copolymers.

9. Tyre according to Claim 8, in which the polyphenylene ether is poly(2,6-dimethyl-1,4-phenylene ether).

10. Tyre according to any one of the preceding claims, in which the weight content of polyphenylene ether represents between 0.05 and 5 times the weight content of styrene present in the thermoplastic styrene elastomer.

11. Tyre according to any one of the preceding claims, in which the protective film is a thermoplastic film selected such that the force of peeling said film from the adhesive layer is less than 1 N/mm at 20°C, and preferentially less than 0.5 N/mm.

12. Assembly of a tyre according to any one of Claims 1 to 11, without protective film, and of a member intended to be attached to the surface of the tyre comprising an attachment layer, the composition of which is based on a block thermoplastic styrene (TPS) elastomer.

13. Assembly of a tyre according to any one of Claims 1 to 11, without protective film, and of a member intended to be attached to the surface of the tyre comprising an attachment layer, the composition of which is based on a block thermoplastic elastomer identical to said block thermoplastic elastomer of the composition of said adhesive layer of the accommodating region of said tyre.

14. Method for attaching a member according to any one of Claims 12 to 13 to the surface of a tyre according to any one of Claims 1 to 11, in which:
- all or a portion of the protective film is removed;
- said adhesive layer and said attachment layer are brought to a temperature greater than the softening points of said thermoplastic blocks of said block thermoplastic elastomers; and
- the attachment layer and the adhesive layer are brought into contact with application of pressure thereto.
